(19) Europäisches Patentamt
European Patent Office
Office européen des brevets

(11) **EP 4 693 864 A1**

(12) **EUROPEAN PATENT APPLICATION**
published in accordance with Art. 153(4) EPC

(43) Date of publication:
**11.02.2026 Bulletin 2026/07**

(21) Application number: **24778298.0**

(22) Date of filing: **30.03.2024**

(51) International Patent Classification (IPC):
*H02M 3/156* (2006.01)      *H02M 3/158* (2006.01)
*H02M 1/08* (2006.01)      *H02M 1/00* (2006.01)

(52) Cooperative Patent Classification (CPC):
Y02B 70/10

(86) International application number:
**PCT/CN2024/085106**

(87) International publication number:
**WO 2024/199513 (03.10.2024 Gazette 2024/40)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **30.03.2023 CN 202310329114**

(71) Applicant: **Vanchip (Tianjin) Technology Co. Ltd
Tianjin 300457 (CN)**

(72) Inventors:
• **LI, Chunling**
  **Tianjin 300457 (CN)**
• **WANG, Yongshou**
  **Tianjin 300457 (CN)**

(74) Representative: **Wang, Bo
Panovision IP
Ebersberger Straße 3
85570 Markt Schwaben (DE)**

(54) **PEAK CURRENT CONTROL CIRCUIT AND METHOD FOR ADAPTIVE RAMP COMPENSATION, AND DC-DC CONVERTER**

(57) Disclosed in the present invention are a peak current control circuit and method for adaptive ramp compensation, and a DC-DC converter. The peak current control circuit comprises an inductive-current detection module, a control signal generation module, an adaptive-ramp-compensation current generation module, a DC voltage adjustment module, a first current generation module and a second current generation module, wherein a first input end and a second input end of the inductive-current detection module are respectively connected to two ends of an inductor in the DC-DC converter; an input end of the first current generation module is connected to an output voltage end of the DC-DC converter; an input end of the second current generation module is connected to an input voltage end of the DC-DC converter; and an output end of the control signal generation module is connected to an inverting input end of a PWM comparator in the DC-DC converter, so as to form a control current loop. The peak current control circuit can adaptively adjust the magnitude of a ramp compensation current.

FIG. 2

**Description**

**BACKGROUND**

**Technical Field**

The present invention relates to a peak current control circuit for adaptive ramp compensation, a corresponding peak current control method, and a DC-DC converter including the peak current control circuit, and pertains to the field of analog integrated circuit technologies.

**Related Art**

With continuous development of integrated circuit technologies, a DC-DC converter is increasingly widely used in an integrated circuit, and an increasingly high requirement is imposed on a DC-DC switching power supply. When controlled in a pulse width modulation (PWM) current mode, the DC-DC converter has good dynamic characteristics such as fast transient response, high bandwidth, and easy implementation. However, when peak current control is introduced, subharmonic oscillation occurs in a circuit when a duty cycle is greater than 50%. Therefore, manual ramp compensation needs to be introduced to resolve this problem.

In the conventional technology, a ramp compensation method for the DC-DC converter is to directly superpose a sawtooth compensation current signal with a fixed slope on a sampled inductive current. The manner is applicable to a DC-DC converter in which both an input voltage and an output voltage remain unchanged. When the output voltage of the DC-DC converter changes, for example, the input voltage is 3.8 V, and the output voltage changes from 1 V to 3.4 V, a duty cycle of a control signal of a power switching transistor changes from 26% to 89%. When the duty cycle of the control signal is less than 50%, no ramp compensation is needed. When the duty cycle of the control signal is greater than 50%, ramp compensation is needed. In addition, when a ramp compensation amount is small, stability of a system during operation at a large duty cycle is affected; or when a ramp compensation amount is large, a current feedback capability of the system during operation at a small duty cycle is affected, affecting transient response performance and a load capacity of the system. Therefore, how to dynamically adjust a magnitude of an introduced manual ramp compensation current to avoid overcompensation or under compensation and maintain operation stability of the DC-DC converter is still a very important technical research topic.

**SUMMARY**

A first technical problem to be resolved in the present invention is to provide a peak current control circuit for adaptive ramp compensation, to implement a control loop in a PWM current mode in a DC-DC converter with a wide output voltage range.

Another technical problem to be resolved in the present invention is to provide a peak current control method for adaptive ramp compensation.

Another technical problem to be resolved in the present invention is to provide a DC-DC converter including the peak current control circuit.

To achieve the foregoing objectives, the following technical solutions are used in the present invention:
According to a first aspect of embodiments of the present invention, a peak current control circuit for adaptive ramp compensation is provided, and is used in a control loop of a DC-DC converter. The peak current control circuit includes an inductive-current detection module, a control signal generation module, an adaptive-ramp-compensation current generation module, a DC voltage adjustment module, a first current generation module, and a second current generation module.

The inductive-current detection module is configured to sample a current flowing through an inductor in the DC-DC converter, convert the current into a corresponding voltage signal at a specific ratio, and output the corresponding voltage signal to the control signal generation module.

The first current generation module is configured to sample an output voltage of the DC-DC converter, convert the output voltage into a corresponding current signal, and separately output the current signal to the control signal generation module and the adaptive-ramp-compensation current generation module.

The second current generation module is configured to sample an input voltage of the DC-DC converter, convert the input voltage into a corresponding current signal, and separately output the current signal to the control signal generation module and the adaptive-ramp-compensation current generation module.

The adaptive-ramp-compensation current generation module receives the current signals output by the second current generation module and the first current generation module, generates a ramp compensation current through subtraction or through scaling and subtraction, and outputs the ramp compensation current to the control signal generation module.

The control signal generation module receives the current signals output by the inductive-current detection module, the second current generation module, and the first current generation module, and current signals output by the DC voltage adjustment module and the adaptive-ramp-compensation current generation module, generates a control signal, and outputs the control signal to an inverting input end of a PWM comparator in the DC-DC converter, to adaptively adjust ramp compensation strength.

Preferably, a first input end and a second input end of the inductive-current detection module are respectively connected to two ends of the inductor in the DC-DC converter, an input end of the first current generation module is connected to an output voltage end of the DC-DC converter, an input end of the second current generation module is connected to an input voltage end of the DC-DC converter, and an output end of the control signal generation module is connected to an inverting input end of a PWM comparator in the DC-DC converter, to form the control loop.

Preferably, the inductive-current detection module includes a first resistor, a second resistor, a second capacitor, and a third capacitor. One end of the first resistor is connected to the first input end of the inductive-current detection module. One end of the second capacitor is connected to the second input end of the inductive-current detection module. Both the other end of the first resistor and the other end of the second capacitor are connected to the third capacitor. The other end of the third capacitor is connected to an output end of the inductive-current detection module and the second resistor. The other end of the second resistor is connected to a ground potential end. The output end of the inductive-current detection module is connected to a first input end of the control signal generation module.

Preferably, the DC voltage adjustment module includes a reference module, a fifth PMOS transistor, and a sixth PMOS transistor. An output end of the reference module is connected to a drain of the fifth PMOS transistor. The drain of the fifth PMOS transistor is short-circuited to a gate of the fifth PMOS transistor and then connected to a gate of the sixth PMOS transistor. Both a source of the fifth PMOS transistor and a source of the sixth PMOS transistor are connected to a power supply end. A drain of the sixth PMOS transistor is connected to an output end of the DC voltage adjustment module. The output end is connected to a first input end of the control signal generation module.

Preferably, the adaptive-ramp-compensation current generation module includes a seventh PMOS transistor, an eighth PMOS transistor, a ninth PMOS transistor, a tenth PMOS transistor, a third NMOS transistor, a fourth NMOS transistor, a fifth NMOS transistor, and a sixth NMOS transistor. A gate of the seventh PMOS transistor is connected to a first input end of the adaptive-ramp-compensation current generation module. A gate of the eighth PMOS transistor is connected to a second input end of the adaptive-ramp-compensation current generation module. Both a source of the seventh PMOS transistor and a source of the eighth PMOS transistor are connected to a power supply end. A drain of the seventh PMOS transistor is connected to a drain of the third NMOS transistor. The drain of the third NMOS transistor is short-circuited to a gate of the third NMOS transistor and then connected to a gate of the fourth NMOS transistor. Both a source of the third NMOS transistor and a source of the fourth NMOS transistor are connected to a ground potential end. A drain of the fourth NMOS transistor is connected to a drain of the eighth PMOS transistor and a drain of the fifth NMOS transistor. The drain of the fifth NMOS transistor is short-circuited to a gate of the fifth NMOS transistor and then connected to a gate of the sixth NMOS transistor. Both a source of the fifth NMOS transistor and a source of the sixth NMOS transistor are connected to the ground potential end. A drain of the sixth NMOS transistor is connected to a drain of the ninth PMOS transistor. The drain of the ninth PMOS transistor is short-circuited to a gate of the ninth PMOS transistor and then connected to a gate of the tenth PMOS transistor. Both a source of the ninth PMOS transistor and a source of the tenth PMOS transistor are connected to the power supply end. A drain of the tenth PMOS transistor is connected to an output end of the adaptive-ramp-compensation current generation module. The output end is connected to a second input end of the control signal generation module.

Preferably, the control signal generation module includes a first capacitor, a first control switch, and a second control switch. One end of the second control switch is connected to a second input end of the control signal generation module. The other end of the second control switch is connected to the first capacitor and is also connected to the first control switch and the output end of the control signal generation module. Both the other end of the first capacitor and the other end of the first control switch are connected to a first input end of the control signal generation module.

An on/off status of the first control switch and an on/off status of the second control switch are respectively controlled by a first control signal and a second control signal.

Preferably, the adaptive-ramp-compensation current generation module may alternatively include an eleventh PMOS transistor, a twelfth PMOS transistor, a seventh NMOS transistor, and an eighth NMOS transistor. A gate of the eleventh PMOS transistor is connected to a first input end of the adaptive-ramp-compensation current generation module. A gate of the twelfth PMOS transistor is connected to a second input end of the adaptive-ramp-compensation current generation module. Both a source of the eleventh PMOS transistor and a source of the twelfth PMOS transistor are connected to a power supply end. A drain of the eleventh PMOS transistor is connected to a drain of the seventh NMOS transistor. The drain of the seventh NMOS transistor is short-circuited to a gate of the seventh NMOS transistor and then connected to a gate of the eighth NMOS transistor. Both a source of the seventh NMOS transistor and a source of the eighth NMOS transistor are connected to a ground potential end. Both a drain of the eighth NMOS transistor and a drain of the twelfth PMOS transistor are connected to an output end of the adaptive-ramp-compensation current generation module. The output end is connected to a second input end of the control signal generation module.

Preferably, when a duty cycle of the DC-DC converter is less than 50%, within each switching period T, the first control signal is a high-level signal, the first control switch is in a normally-on state, a first voltage is directly output as the control signal, the second control signal is a low-level signal, and the second control switch is in a normally-off state to cut off the ramp compensation current, where the control signal Vramp satisfies the following formula:

$$V_{ramp} = V_2 = R_2(k\pi FL * I_L + I1 + I2 + I3 + kV_{out}),$$

where

V2 is the first voltage, I1 is an output current of the second current generation module, I2 is an output current of the first current generation module, I3 is an output current of the DC voltage adjustment module, Vout is an output-end voltage of the DC-DC converter, F is a switching frequency in the DC-DC converter, L is an inductance value of the inductor in the DC-DC converter, $I_L$ is the current flowing through the inductor, $R_2$ is a resistance value of the second resistor, and k is a coefficient related to the resistors and the capacitors in the inductive-current detection module.

Preferably, when a duty cycle of the DC-DC converter is greater than or equal to 50%, at an end moment of each switching period T, the first control signal generates a high-level pulse signal, the first control switch is instantly turned on to reset a charge on the first capacitor and pull up the control signal to a first voltage, the second control signal generates a low-level pulse signal, and the second control switch is instantly turned off to cut off the ramp compensation current at a moment at which the charge on the first capacitor is reset; and within each switching period T other than the end moment, the first control signal is a low-level signal, the first control switch is in an off state, the second control signal is a high-level signal, the second control switch is in an on state, the first capacitor is charged by the ramp compensation current to form a compensation voltage, and in this case, the compensation voltage and the first voltage are added up and then output as the control signal, where the control signal Vramp satisfies the following formula:

$$V_{ramp} = \frac{k2*k3}{C1}(I6 - k1*I4)t + R2*k* \pi FL*I_L + R_2I1 + R_2(I2 + k*V_{out}) + R_2I3,$$

where

C1 is a capacitance value of the first capacitance, I4 is a current obtained by scaling I1, I6 is a current obtained by scaling I2, all of k1, k2, and k3 are ratio coefficients, and $0 \leq t \leq T$.

According to a second aspect of embodiments of the present invention, a peak current control method for adaptive ramp compensation is provided, is implemented based on the foregoing peak current control circuit, and includes the following steps:

(1) sampling an input voltage, an output voltage, and an inductive current in a DC-DC converter, and respectively converting the input voltage, the output voltage, and the inductive current into a first current, a second current, and a third current; and outputting, by a DC voltage adjustment module, a fourth current;

(2) forming, by the first current, the second current, the third current, and the fourth current, a first voltage V2, providing the first voltage V2 to a first input end of a control signal generation module, inputting the first current and the second current to an adaptive-ramp-compensation current generation module to generate a ramp compensation current, and providing the ramp compensation current to a second input end of the control signal generation module;

(3) in the DC-DC converter, when a duty cycle is less than 50%, performing a next step; or when a duty cycle is greater than or equal to 50%, performing step (6);

(4) in the control signal generation module, turning on a first control switch, turning off a second control switch, outputting a control signal equal to a first voltage, and providing the control signal to a PWM comparator in a control loop; and

(5) returning to step (1); or

(6) in the control signal generation module, within each period T other than an end moment, turning off a first control switch, turning on a second control switch, charging, by the ramp compensation current, a first capacitor to form a compensation voltage, outputting a control signal equal to a sum of a first voltage and the compensation voltage, and providing the control signal to a PWM comparator in a control loop; and

(7) returning to step (1).

According to a third aspect of embodiments of the present invention, a DC-DC converter is provided. The DC-DC converter includes the foregoing peak current control circuit for adaptive ramp compensation.

Compared with the conventional technology, in the peak current control circuit for adaptive ramp compensation provided in the present invention, through cooperation of modules and units, when a duty cycle of a DC-DC converter is greater than or equal to 50%, a compensation current that varies with an output voltage and an input voltage can be provided, so that a generated ramp compensation amount is kept within an appropriate range (to be specific, ranging from 0.75 time to 1 time of a slope of a falling segment of an inductive current). In this way, in a system with a variable input voltage and a variable output voltage, in an overall loop, no subharmonic oscillation occurs due to under compensation, and a transient characteristic of a peak current mode is not affected by overcompensation. In addition, in the present invention, a voltage range of a control signal Vramp can be further adjusted, to keep the control signal within an appropriate range, and ensure normal operation of an error amplifier. Therefore, the peak current control circuit for adaptive ramp compensation provided in the present invention has the following beneficial effects: skillful and proper structural design, low design costs, high converter operation efficiency, superb circuit performance, and the like.

## BRIEF DESCRIPTION OF THE DRAWINGS

FIG. 1 is a schematic of a buck DC-DC converter according to an embodiment of the present invention;

FIG. 2 is a block diagram of a peak current control circuit for adaptive ramp compensation according to an embodiment of the present invention;

FIG. 3 is a schematic of a peak current control circuit for adaptive ramp compensation according to a first embodiment of the present invention;

FIG. 4(a) is a schematic of a voltage-to-current conversion circuit of a first solution according to an embodiment of the present invention;

FIG. 4(b) is a schematic of a voltage-to-current conversion circuit of a second solution according to an embodiment of the present invention;

FIG. 5(a) is a diagram of waveforms of a control signal VT1 and a control signal VT2 when a duty cycle is less than 50% according to an embodiment of the present invention;

FIG. 5(b) is a diagram of waveforms of a control signal VT1 and a control signal VT2 when a duty cycle is greater than or equal to 50% according to an embodiment of the present invention;

FIG. 6 is a schematic of a peak current control circuit for adaptive ramp compensation according to a second embodiment of the present invention;

FIG. 7 is a flowchart of a method for implementing adaptive ramp compensation by a peak current control circuit according to an embodiment of the present invention; and

FIG. 8 is a diagram of simulation testing on a waveform of a control signal Vramp in a buck DC-DC converter according to an embodiment of the present invention.

## DETAILED DESCRIPTION

The following further describes the technical solutions of the present invention in detail with reference to the accompanying drawings and specific embodiments.

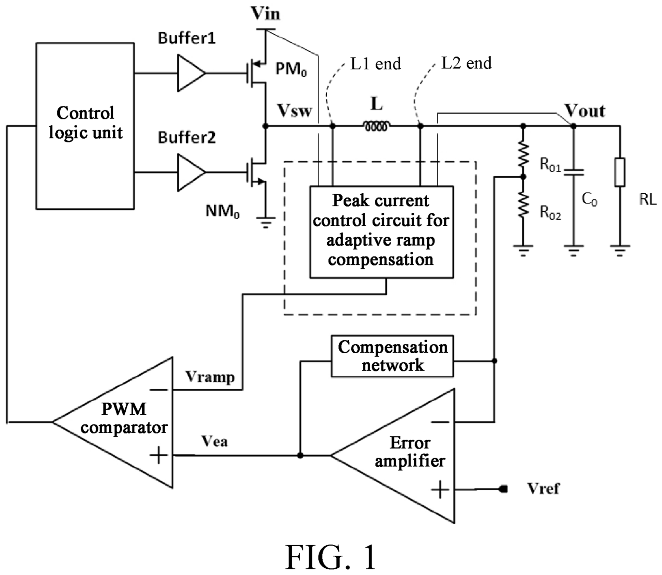

FIG. 1 is a schematic of a buck DC-DC converter according to an embodiment of the present invention. The DC-DC converter includes at least a switching transistor $PM_0$, a switching transistor $NM_0$, an inductor L, a capacitor $C_0$, a load $R_L$, an input voltage end Vin, and an output voltage end Vout. A control circuit of the DC-DC converter controls an output voltage in a PWM current mode. To increase a response speed of the circuit, a peak current control loop is introduced. The control loop includes a voltage divider resistor feedback circuit, an error amplifier circuit, a ramp compensation control circuit, a PWM comparator, a control logic unit, and a buffer circuit. The ramp compensation control circuit is a peak current control circuit provided in embodiments of the present invention. As indicated by a dashed-line box in FIG. 1, two input ends of the peak current control circuit are respectively connected to two ends of the inductor L, an output end of the peak current control circuit is connected to an inverting input end of the PWM comparator, and the input voltage end Vin and the output voltage end Vout of the DC-DC converter are also respectively connected to other two input ends of the peak current control circuit.

When a duty cycle is greater than or equal to 50% due to a change in the output voltage of the DC-DC converter, dynamic ramp compensation needs to be performed, to avoid subharmonic oscillation in a current loop. The peak current control circuit provided in embodiments of the present invention can adaptively adjust ramp compensation strength based on changes in the input voltage Vin and the output voltage Vout.

In addition, when the DC-DC converter operates stably, a moment to which an intersection point between an output signal Vea of the error amplifier and a control signal Vramp output by the peak current control circuit belongs needs to meet a requirement on the duty cycle. A variation range of the duty cycle is large. Therefore, the intersection point needs to be not excessively low when the duty cycle is small and not excessively high when the duty cycle is large. Otherwise, the output signal Vea of the error amplifier may be excessively small or excessively large. Consequently, the error amplifier is in an abnormal operating state, affecting a gain of the error amplifier and output precision of the circuit. In the peak current control circuit provided in embodiments of the present invention, an overall peak voltage range of the control signal Vramp can be adjusted through a DC voltage adjustment module, to avoid occurrence of the foregoing phenomenon.

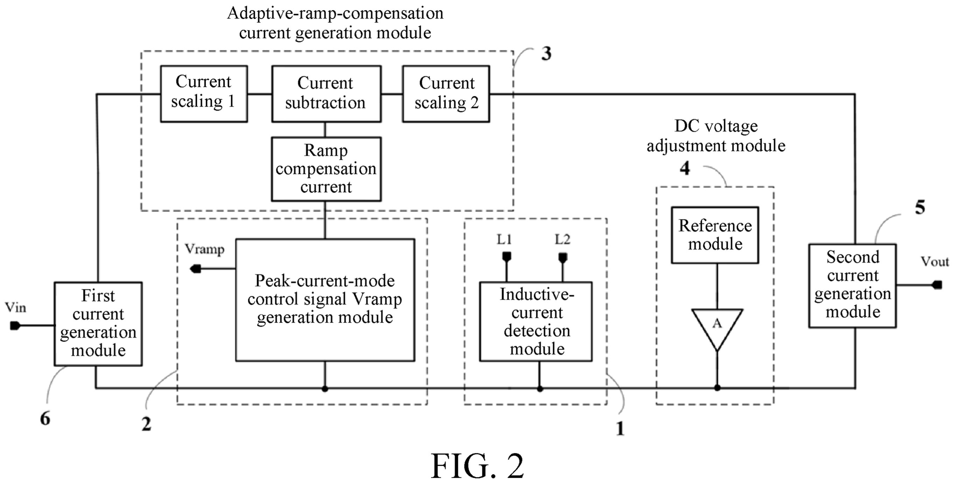

FIG. 2 is a block diagram of a peak current control circuit according to an embodiment of the present invention. The peak current control circuit includes an inductive-current detection module 1, a control signal generation module 2, an adaptive-ramp-compensation current generation module 3, a DC voltage adjustment module 4, a first current generation module 5, and a second current generation module 6. A first input end and a second input end of the inductive-current detection module 1 are respectively connected to two ends of an inductor L in a DC-DC converter, an output end of the inductive-current detection module 1 is connected to a first input end of the control signal generation module 2, an input end of the first current generation module 5 is connected to an output voltage end Vout of the DC-DC converter, a first output end of the first current generation module 5 is connected to the first input end of the control signal generation module 2, a second output end of the first current generation module 5 is connected to a second input end of the adaptive-ramp-compensation current generation module 3, an input end of the second current generation module 6 is connected to an input voltage end Vin of the DC-DC converter, a first output end of the second current generation module 6 is connected to the first input end of the control signal generation module 2, a second output end of the second current generation module 6 is connected to a first input end of the adaptive-ramp-compensation current generation module 3, an output end of the DC voltage adjustment module 4 is connected to the first input end of the control signal generation module 2, an output end of the adaptive-ramp-compensation current generation module 3 is connected to a second input end of the control signal generation module 2, and an output end of the control signal generation module 2 is connected to an inverting input end of a PWM comparator in the DC-DC converter, to form a control current loop.

The inductive-current detection module 1 is configured to sample a current flowing through the inductor L in the DC-DC converter, convert the current into a corresponding voltage signal at a specific ratio, and output the corresponding voltage signal to the control signal generation module 2.

The first current generation module 5 is configured to sample an output voltage Vout of the DC-DC converter, convert the output voltage Vout into a corresponding current signal, and separately output the current signal to the control signal generation module 2 and the adaptive-ramp-compensation current generation module 3.

The second current generation module 6 is configured to sample an input voltage Vin of the DC-DC converter, convert the input voltage Vin into a corresponding current signal, and separately output the current signal to the control signal generation module 2 and the adaptive-ramp-compensation current generation module 3.

The DC voltage adjustment module 4 outputs a DC current signal to the control signal generation module 2, and is configured to adjust a maximum value of a control signal Vramp, so that a variation range of the maximum value of the control signal Vramp is within an appropriate operating range of an error amplifier in the DC-DC converter.

The adaptive-ramp-compensation current generation module 3 receives the current signals output by the second current generation module 6 and the first current generation module 5, generates a ramp compensation current Iramp through subtraction or through scaling and subtraction, and outputs the ramp compensation current Iramp to the control signal generation module 2. The adaptive-ramp-compensation current generation module 3 includes, based on function settings, a total of four circuit units: two current scaling units, a current subtraction unit, and a ramp compensation current unit.

After receiving the current signals output by the inductive-current detection module 1, the second current generation module 6, and the first current generation module 5, and the current signals output by the DC voltage adjustment module 4 and the adaptive-ramp-compensation current generation module 3, the control signal generation module 2 generates the control signal Vramp, and outputs the control signal Vramp to the inverting input end of the PWM comparator in the DC-DC converter, to adaptively adjust ramp compensation strength.

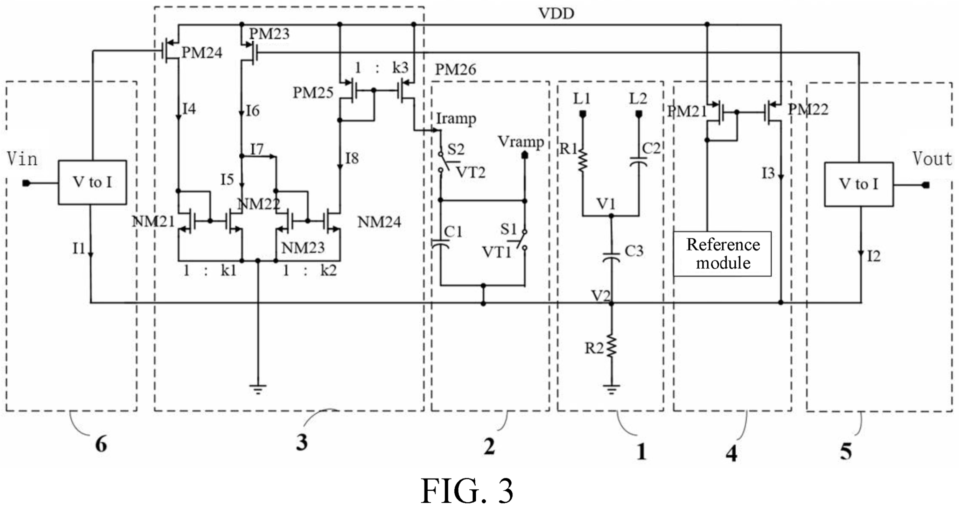

As shown in FIG. 3, in a first embodiment of the present invention, a peak current control circuit for adaptive ramp compensation includes an inductive-current detection module 1, a control signal generation module 2, an adaptive-ramp-compensation current generation module 3, a DC voltage adjustment module 4, a first current generation module 5, and a second current generation module 6. Circuit compositions of the modules and units are separately described below in detail.

The inductive-current detection module 1 includes a first resistor R1, a second resistor R2, a second capacitor C2, and a third capacitor C3. A first input end of this unit circuit is an L1 end, a second input end is an L2 end, and an output end is a V2 end. The first input end L1 and the second input end L2 are respectively connected to two ends of an inductor L in a DC-DC converter. One end of the first resistor R1 is connected to the first input end L1. One end of the second capacitor C2 is connected to the second input end L2. Both the other end of the first resistor R1 and the other end of the second capacitor C2 are connected to the third capacitor C3. The other end of the third capacitor C3 is connected to the output end V2 and the second resistor R2. The other end of the second resistor R2 is connected to a ground potential end. In addition, the output end V2 is connected to a first input end of the control signal generation module 2.

Both the first current generation module 5 and the second current generation module 6 are implemented by using a voltage-to-current (V-to-I) conversion circuit. In embodiments of the present invention, two solutions of the voltage-to-current conversion circuit are provided. An input end of a voltage-to-current conversion circuit used for the first current generation module 5 is connected to the output voltage end Vout of the DC-DC converter, and an output current of the voltage-to-current conversion circuit is a second current Iout2. An input end of a voltage-to-current conversion circuit used for the second current generation module 6 is connected to the input voltage end Vin of the DC-DC converter, and an output current of the voltage-to-current conversion circuit is a first current Iout1.

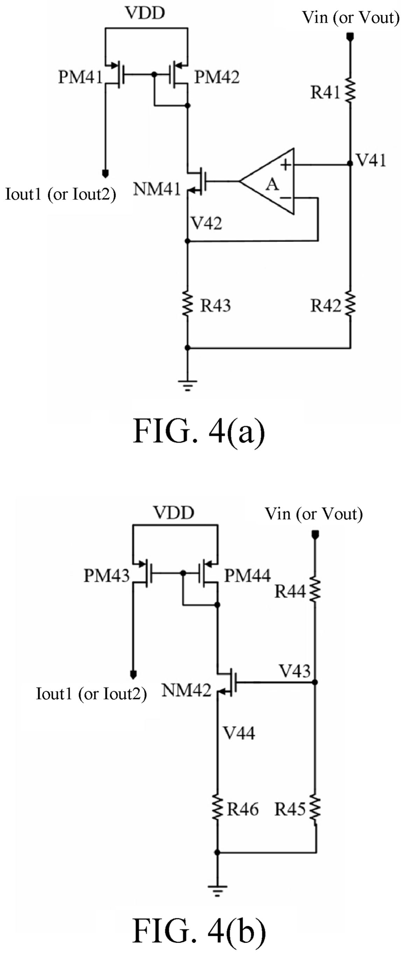

As shown in FIG. 4(a), a voltage-to-current conversion circuit of a first solution includes a third resistor R41, a fourth resistor R42, a fifth resistor R43, a first PMOS transistor PM41, a second PMOS transistor PM42, a first NMOS transistor NM41, and a first operational amplifier A. The third resistor R41 is connected to an input end of this unit circuit. The other end of the third resistor R41 is connected to a non-inverting input end of the first operational amplifier A and the fourth resistor R42. The other end of the fourth resistor R42 is connected to the fifth resistor R43 and a ground potential end. The other end of the fifth resistor R43 is connected to an inverting input end of the first operational amplifier A and a source of the first NMOS transistor NM41. An output end of the first operational amplifier A is connected to a gate of the first NMOS transistor NM41. A drain of the first NMOS transistor NM41 is connected to a drain of the second PMOS transistor PM42. The drain of the second PMOS transistor PM42 is short-circuited to a gate of the second PMOS transistor PM42 and then connected to a gate of the first PMOS transistor PM41. Both a source of the second PMOS transistor PM42 and a source of the first PMOS transistor PM41 are connected to a power supply end VDD. A drain of the first PMOS transistor PM41 is connected to an output end of this unit circuit.

As shown in FIG. 4(b), a voltage-to-current conversion circuit of a second solution includes a sixth resistor R44, a seventh resistor R45, an eighth resistor R46, a third PMOS transistor PM43, a fourth PMOS transistor PM44, and a second NMOS transistor NM42. The sixth resistor R44 is connected to an input end of this unit circuit. The other end of the sixth resistor R44 is connected to a gate of the second NMOS transistor NM42 and the seventh resistor R45. The other end of the seventh resistor R45 is connected to the eighth resistor R46 and a ground potential end. The other end of the eighth resistor R46 is connected to a source of the second NMOS transistor NM42. A drain of the second NMOS transistor NM42 is connected to a drain of the fourth PMOS transistor PM44. The drain of the fourth PMOS transistor PM44 is short-circuited to a gate of the fourth PMOS transistor PM44 and then connected to a gate of the third PMOS transistor PM43. Both a source of the fourth PMOS transistor PM44 and a source of the third PMOS transistor PM43 are connected to a power supply end VDD. A drain of the third PMOS transistor PM43 is connected to an output end of this unit circuit.

The DC voltage adjustment module 4 includes a reference module, a fifth PMOS transistor PM21, and a sixth PMOS transistor PM22. An output end of the reference module is connected to a drain of the fifth PMOS transistor PM21. The drain of the fifth PMOS transistor PM21 is short-circuited to a gate of the fifth PMOS transistor PM21 and then connected to a gate of the sixth PMOS transistor PM22. Both a source of the fifth PMOS transistor PM21 and a source of the sixth PMOS transistor PM22 are connected to a power supply end VDD. A drain of the sixth PMOS transistor PM22 is connected to an output end of this unit circuit. The reference module may be implemented by using an existing bandgap circuit.

The adaptive-ramp-compensation current generation module 3 includes a seventh PMOS transistor PM24, an eighth PMOS transistor PM23, a ninth PMOS transistor PM25, a tenth PMOS transistor PM26, a third NMOS transistor NM21, a fourth NMOS transistor NM22, a fifth NMOS transistor NM23, and a sixth NMOS transistor NM24. A gate of the seventh PMOS transistor PM24 is connected to a first input end of this unit circuit. A gate of the eighth PMOS transistor PM23 is connected to a second input end of this unit circuit. Both a source of the seventh PMOS transistor PM24 and a source of the eighth PMOS transistor PM23 are connected to a power supply end VDD. A drain of the seventh PMOS transistor PM24 is connected to a drain of the third NMOS transistor NM21. The drain of the third NMOS transistor NM21 is short-circuited to a gate of the third NMOS transistor NM21 and then connected to a gate of the fourth NMOS transistor NM22. Both a source of the third NMOS transistor NM21 and a source of the fourth NMOS transistor NM22 are connected to a ground potential end. A drain of the fourth NMOS transistor NM22 is connected to a drain of the eighth PMOS transistor PM23 and a drain of the fifth NMOS transistor NM23. The drain of the fifth NMOS transistor NM23 is short-circuited to a gate of the fifth NMOS transistor NM23 and then connected to a gate of the sixth NMOS transistor NM24. Both a source of the fifth NMOS transistor NM23 and a source of the sixth NMOS transistor NM24 are connected to the ground potential end. A drain of the sixth NMOS transistor NM24 is connected to a drain of the ninth PMOS transistor PM25. The drain of the ninth PMOS transistor PM25 is short-circuited to a gate of the ninth PMOS transistor PM25 and then connected to a gate of the tenth PMOS transistor PM26. Both a source of the ninth PMOS transistor PM25 and a source of the tenth PMOS transistor PM26 are connected to the power supply end VDD. A drain of the tenth PMOS transistor PM26 is connected to an output end of this unit circuit.

In the adaptive-ramp-compensation current generation module 3, the eighth PMOS transistor PM23 and the seventh PMOS transistor PM24 respectively form two current scaling units; the third NMOS transistor NM21, the fourth NMOS transistor NM22, and the fifth NMOS transistor NM23 form a current subtraction unit; and the sixth NMOS transistor NM24, the ninth PMOS transistor PM25, and the tenth PMOS transistor PM26 form a ramp compensation current unit.

The control signal generation module 2 includes a first capacitor C1, a first control switch S1, and a second control switch S2. One end of the second control switch S2 is connected to a second input end of this unit circuit. The other end of the second control switch S2 is connected to the first capacitor C1 and is also connected to the first control switch S1 and an output end of this unit circuit. Both the other end of the first capacitor C1 and the other end of the first control switch S1 are connected to a first input end of this unit circuit.

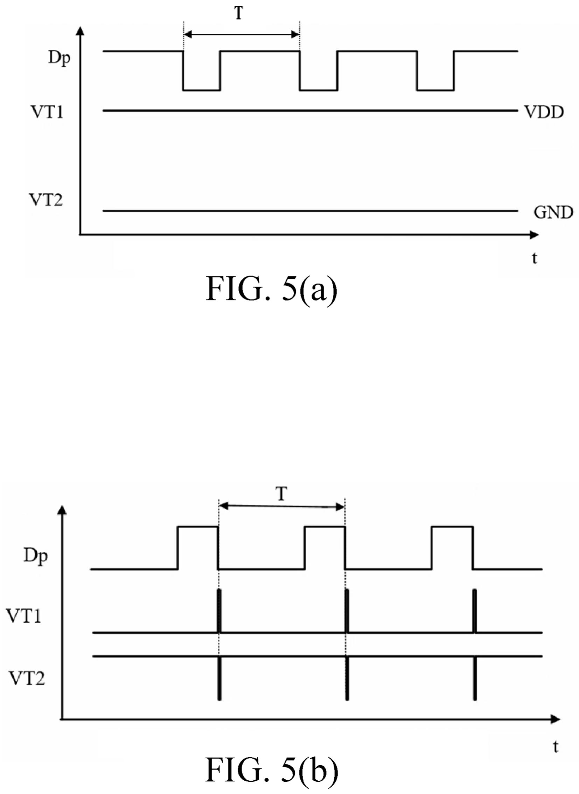

In the control signal generation module 2, an on-off status of the first control switch S1 and an on-off status of the second control switch S2 are respectively controlled by a control signal VT1 and a control signal VT2. Waveforms of the control signal VT1 and the control signal VT2 are shown in FIG. 5(a) and FIG. 5(b). FIG. 5(a) shows a waveform of a control signal when a duty cycle is less than 50%. FIG. 5(b) shows a waveform of a control signal when a duty cycle is greater than or equal to 50%. A control signal $D_P$ in the figure is a control signal of a switching transistor $PM_0$ in the DC-DC converter.

Circuit composition structures of the modules and units in the peak current control circuit for adaptive ramp compensation in the first embodiment of the present invention are described above in detail. An operating principle of the peak current control circuit is analyzed and described below with reference to FIG. 3.

The inductive-current detection module 1 detects a current flowing through the inductor L in the DC-DC converter, and converts the current into an output-end voltage signal V2 based on a specific ratio. The buck DC-DC converter shown in FIG. 1 is used as an example. A first input end L1 and a second input end L2 of this unit circuit are respectively connected to two ends of the inductor L in the DC-DC converter, and the second input end L2 is connected to an output voltage (namely, Vout) side of the DC-DC converter. A frequency F of the switching transistor $PM_0$ in the DC-DC converter is usually a constant value. It is assumed that a resistance value of the first resistor R1 in this unit circuit is $1/(2\pi*F*C2)$, and $R1=1/(2\pi*F*C2)=Zrc$, where C2 is a capacitance value of the second capacitor C2, and Zrc is a substitution symbol introduced for ease of expression. In this case, the output-end voltage V2 of this unit circuit is as follows:

$$V_2 = \frac{R_2}{\frac{1}{2\pi FC_3} + R_2 + \frac{Z_{rc}}{2}}(\pi FL * I_L + V_{out})$$

(1)

L is an inductance value of the inductor L in the DC-DC converter, $I_L$ is the current flowing through the inductor L, Vout is a voltage at an output end of the DC-DC converter, $R_2$ is a resistance value of the second resistor R2 in this unit circuit, and $C_3$ is a capacitance value of the third capacitor C3 in this unit circuit.

It can be learned from the formula 1 that, when the frequency F is constant, the output-end voltage V2 and the inductive current $I_L$ are in a linear relationship, and a magnitude of the output-end voltage V2 may be changed by adjusting magnitudes of the third capacitor C3 and the second resistor R2. In addition, because a current ripple of the inductive current $I_L$ is large compared with a voltage ripple of the output-end voltage Vout, impact of the voltage ripple of the output-end voltage Vout on the current ripple of the inductive current $I_L$ may be ignored, and it can be considered that only the magnitude of the output-end voltage V2 of this unit circuit is overall changed.

In the control signal generation module 2, based on the voltage V2 in the formula 1, a ramp compensation voltage component is superposed on the voltage V2, a control signal Vramp is generated at an output end of this unit circuit, and the control signal Vramp is output to the inverting input end of the PWM comparator in the DC-DC converter. In this case, the voltage V2 not only includes a voltage signal formed by converting an inductive current sampled by the inductive-current detection module 1, but also includes a voltage signal generated on the second resistor R2 by output currents I3, I2, and I1 provided by the DC voltage adjustment module 4, the first current generation module 5, and the second current generation module 6. Therefore, a complete expression of the voltage V2 (a first voltage) is as follows:

$$V_2 = \frac{R_2}{\frac{1}{2\pi FC_3} + R_2 + \frac{Z_{rc}}{2}}(\pi FL * I_L + V_{out}) + R_2(I1 + I2 + I3)$$

(2)

It is assumed that:

$$k = \frac{1}{\frac{1}{2\pi FC_3} + R_2 + \frac{Z_{rc}}{2}}$$

(3)

The formula 2 may be organized as follows:

$$V_2 = R_2(k\pi FL * I_L + I1 + I2 + I3 + kV_{out}) \tag{4}$$

I1 is an output current of the second current generation module 6, and is a function of an input voltage Vin of the DC-DC converter. I2 is an output current of the first current generation module 5, and is a function of an output voltage Vout of the DC-DC converter. I3 is an output current of the DC voltage adjustment module 4.

It can be learned from the formula 2, the formula 3, and the formula 4 that a magnitude of the voltage V2 (the first voltage) can vary with the input voltage Vin and the output voltage Vout of the DC-DC converter. In addition, an appropriate DC voltage may be set to ensure that fluctuation of the voltage V2 is within a specific range, in other words, to control the control signal Vramp to vary within an appropriate range, to ensure that an error amplifier in the DC-DC converter remains operating in a normal state.

In the control signal generation module 2, on/off of the first control switch S1 and on/off of the second control switch S2 are respectively controlled by a control signal VT1 and a control signal VT2. As shown in FIG. 5(a), when the output voltage Vout is less than a half of the input voltage Vin, in other words, when the duty cycle is less than 50%, no ramp compensation is needed. Therefore, the first control switch S1 controlled by the control signal VT1 is in a normally-on state, and the voltage V2 (the first voltage) is directly output as the control signal Vramp. In this case, the second control switch S2 controlled by the control signal VT2 is in a normally-off state, and a ramp compensation current Iramp is cut off. Therefore, when the duty cycle is less than 50%, the control signal Vramp is as follows:

$$V_{ramp} = V_2 \tag{5}$$

As shown in FIG. 5(b), when the duty cycle is greater than or equal to 50%, at an end moment of each switching period T, the control signal VT1 generates a high-level pulse signal, the first control switch S1 is instantly turned on to reset a charge on the first capacitor C1, in other words, pull up the control signal Vramp to the voltage V2, the control signal VT2 generates a low-level pulse signal, and the second control switch S2 is instantly turned off to cut off the ramp compensation current Iramp at a moment at which the charge on the first capacitor C1 is reset. Within a period T other than an end moment of the period T, the first control switch S1 is in an off state, the second control switch S2 is in an on state, and the first capacitor C1 is charged by the ramp compensation current Iramp generated by the adaptive ramp compensation circuit, to form a compensation voltage. The compensation voltage $\Delta V_{C1}$ is as follows:

$$\Delta V_{C1} = \frac{I_{ramp}}{C_1} * t \qquad (0 \leq t \leq T) \tag{6}$$

Iramp is a ramp compensation current output by the adaptive-ramp-compensation current generation module 3, $C_1$ is a capacitance value of the first capacitor C1 in this unit circuit, and t is charging time of the first capacitor C1 within a period T.

The compensation voltage $\Delta V_{C1}$ and the voltage V2 (shown in the formula 4) are added up and then output as the control signal Vramp. Therefore, when the duty cycle is greater than or equal to 50%, within one period, the control signal Vramp is as follows:

$$V_{ramp} = \frac{I_{ramp}}{C_1} * t + V_2 \qquad (0 \leq t \leq T) \tag{7}$$

A second input end of the adaptive-ramp-compensation current generation module 3 receives an output current signal provided by the first current generation module 5, and the output current signal is scaled to a current I6 through the eighth PMOS transistor PM23. In addition, a first input end of the adaptive-ramp-compensation current generation module 3 receives an output current signal provided by the second current generation module 6, and the output current signal is scaled to a current I4 through the seventh PMOS transistor PM24. The current I4 passes through a current mirror formed by the third NMOS transistor NM21 and the fourth NMOS transistor NM22, and the current I4 is mirrored to a current I5 based on a ratio of 1:k1. A difference I6-I5 between the current I6 and the current I5 is I7. The current I7 passes through a current mirror formed by the fifth NMOS transistor NM23 and the sixth NMOS transistor NM24, and the current I7 is mirrored to a current I8 based on a ratio of 1:k2. The current I8 passes through a current mirror formed by the ninth PMOS transistor PM25 and the tenth PMOS transistor PM26, the current I8 is mirrored based on a ratio of 1:k3 to generate the ramp compensation current Iramp, and the ramp compensation current Iramp is output to a second input end of the control signal generation module 2.

It can be learned from the foregoing analysis that a relationship between the ramp compensation current Iramp and the currents I4 and I6 is as follows:

$$Iramp = k2*k3(I6 - k1*I4) \qquad (8)$$

The current I6 is a component related to the output voltage Vout of the DC-DC converter, and the current I4 is a component related to the input voltage Vin of the DC-DC converter. The buck DC-DC converter is used as an example. When the input voltage Vin is constant and the output voltage Vout increases, in other words, the duty cycle increases, the current I4 remains unchanged, and the current I6 increases. It can be learned from the formula 8 that the ramp compensation current Iramp increases. When the output voltage Vout is constant and the input voltage Vin increases, in other words, the duty cycle decreases, the current I6 remains unchanged, and the current I4 increases. It can be learned from the formula 8 that the ramp compensation current Iramp decreases. Therefore, the peak current control circuit can adaptively adjust a magnitude of the ramp compensation current Iramp based on changes in the input voltage Vin and the output voltage Vout.

In the foregoing analysis, the current I4 and the current I6 are respectively a current linearly changing with the input voltage Vin and a current linearly changing with the output voltage Vout. The two currents are respectively provided by the second current generation module 6 and the first current generation module 5. The second current generation module 6 and the first current generation module 5 may be implemented by using a voltage-to-current conversion circuit.

The reference module in the DC voltage adjustment module 4 provides a DC current. The DC current is properly scaled by a current mirror formed by the fifth PMOS transistor PM21 and the sixth PMOS transistor PM22 to output a current I3 for changing a voltage peak range of the control signal Vramp, so that the error amplifier in the DC-DC converter can operate within an appropriate range. The formula 4 and the formula 8 may be substituted into the formula 7 to obtain the control signal Vramp as follows:

$$V_{ramp} = \frac{k2*k3}{C1}(I6 - k1*I4)\,t + R2*k*\pi FL*I_L + R_2 I1 + R_2(I2 + k*V_{out}) + R_2 I3 \qquad (9)$$

The first term is a ramp compensation term, the second term is a term related to the inductive current $I_L$, the third term is a term related to the input voltage Vin, the fourth term is a term related to the output voltage Vout, the fifth term is a DC voltage adjustment term, and $0 \leq t \leq T$.

It can be learned from the formula 9 that an overall range of the control signal Vramp can be adjusted by changing a magnitude of the output current I3 of this unit circuit, so that the control signal Vramp can vary within an appropriate operating range of the error amplifier in the DC-DC converter.

Both the first current generation module 5 and the second current generation module 6 are voltage-to-current conversion circuits, and can convert a voltage signal into a current signal. As shown in FIG. 4(a), an operating principle of the voltage-to-current conversion circuit of the first solution is as follows: A voltage divider circuit formed by the third resistor R41 and the fourth resistor R42 forms a divided voltage V41 on a node of the circuit based on an input-end voltage (Vin or Vout), and the node voltage V41 and a node voltage V42 are clamped by the first operational amplifier A, so that the two node voltages are equal. Therefore, a current I flowing through the fifth resistor R43 is V41/R43, and the current is replicated by a current mirror formed by the first PMOS transistor PM41 and the second PMOS transistor PM42 (it is assumed that a replication ratio is 1:1) to generate an output current (Iout1 or Iout2). The output current is denoted as Iout:

$$I_{out} = \frac{R_{42}}{R_{43}(R_{41} + R_{42})} V_{IN} \qquad (10)$$

Iout is an output current of the voltage-to-current conversion circuit, and $V_{IN}$ is an input voltage of the voltage-to-current conversion circuit. When the voltage-to-current conversion circuit is used in the first current generation module 5, Iout is the second current Iout2, and $V_{IN}$ is the output voltage Vout of the DC-DC converter. When the voltage-to-current conversion circuit is used in the second current generation module 6, Iout is the first current Iout1, and $V_{IN}$ is the input voltage Vin of the DC-DC converter.

It can be learned from the formula 10 that the output current Iout and the input voltage $V_{IN}$ of the voltage-to-current conversion circuit are in a linear relationship. When the seventh PMOS transistor PM24 or the eighth PMOS transistor PM23 in the circuit of the adaptive-ramp-compensation current generation module 3 is replaced with the first PMOS transistor PM41 in the voltage-to-current conversion circuit (as shown in FIG. 3), the output current Iout of the voltage-to-current conversion circuit may be the current I6 or the current I4 in the formula 8.

As shown in FIG. 4(b), an operating principle of the voltage-to-current conversion circuit of the second solution is similar to that of the first solution. The sixth resistor R44 and the seventh resistor R45 form a voltage divider circuit. The third PMOS transistor PM43 and the fourth PMOS transistor PM44 form a current mirror circuit. The second NMOS transistor NM42 operates as a source follower. To be specific, a node voltage V44 changes with a change in a node voltage V43. It is assumed that bias effect and a change in a gate-source voltage of the second NMOS transistor NM42 are ignored. An output-end current Iout is as follows:

$$I_{out} = \frac{\frac{R_{45}}{R_{44}+R_{45}}V_{IN}-V_{gsNM42}}{R_{46}} \quad\quad (11)$$

*VgsNM42* is the gate-source voltage of the second NMOS transistor NM42, and meanings represented by Iout and $V_{IN}$ are the same as those in the formula 10.

Similarly, it can be learned from the formula 11 that the output current Iout and the input voltage $V_{IN}$ of the voltage-to-current conversion circuit are in a linear relationship. When the seventh PMOS transistor PM24 or the eighth PMOS transistor PM23 in the circuit of the adaptive-ramp-compensation current generation module 3 is replaced with the third PMOS transistor PM43 in the voltage-to-current conversion circuit (as shown in FIG. 3), the output current Iout of the voltage-to-current conversion circuit may be the current I6 or the current I4 in the formula 8.

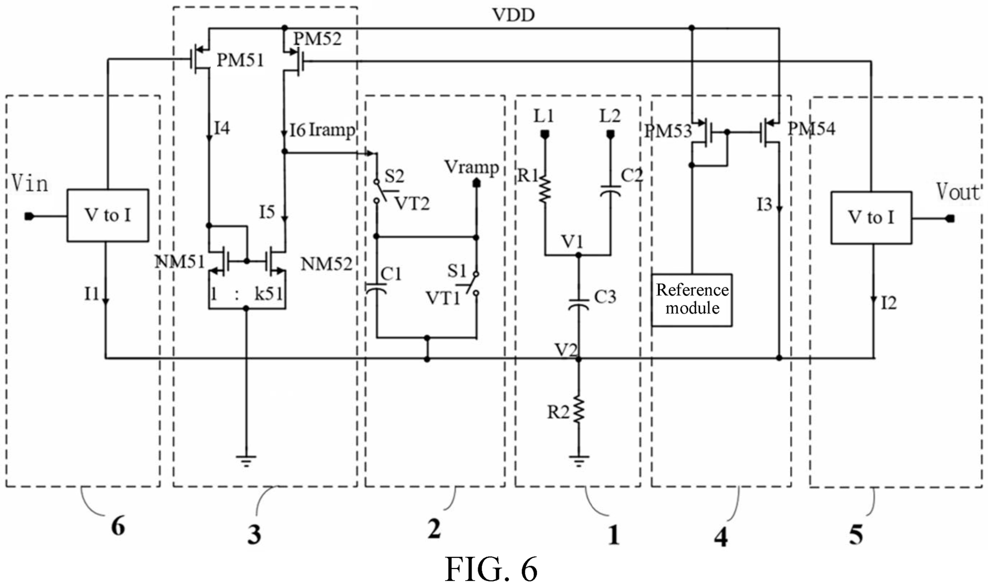

As shown in FIG. 6, in a second embodiment of the present invention, a peak current control circuit for adaptive ramp compensation includes an inductive-current detection module 1, a control signal generation module 2, an adaptive-ramp-compensation current generation module 3, a DC voltage adjustment module 4, a first current generation module 5, and a second current generation module 6. All modules and units other than the adaptive-ramp-compensation current generation module 3 are the same as corresponding units in the first embodiment. A circuit structure and an operating principle of the adaptive-ramp-compensation current generation module 3 in this embodiment are described below in detail, and other modules and units are not described in detail again.

In the second embodiment of the present invention, the adaptive-ramp-compensation current generation module 3 includes an eleventh PMOS transistor PM51, a twelfth PMOS transistor PM52, a seventh NMOS transistor NM51, and an eighth NMOS transistor NM52. A gate of the eleventh PMOS transistor PM51 is connected to a first input end of this unit circuit. A gate of the twelfth PMOS transistor PM52 is connected to a second input end of this unit circuit. Both a source of the eleventh PMOS transistor PM51 and a source of the twelfth PMOS transistor PM52 are connected to a power supply end VDD. A drain of the eleventh PMOS transistor PM51 is connected to a drain of the seventh NMOS transistor NM51. The drain of the seventh NMOS transistor NM51 is short-circuited to a gate of the seventh NMOS transistor NM51 and then connected to a gate of the eighth NMOS transistor NM52. Both a source of the seventh NMOS transistor NM51 and a source of the eighth NMOS transistor NM52 are connected to a ground potential end. Both a drain of the eighth NMOS transistor NM52 and a drain of the twelfth PMOS transistor PM52 are connected to an output end of this unit circuit.

In the adaptive-ramp-compensation current generation module 3, the eleventh PMOS transistor PM51 and the twelfth PMOS transistor PM52 respectively form two current scaling units, and the seventh NMOS transistor NM51 and the eighth NMOS transistor NM52 form a current subtraction unit. In the second embodiment of the present invention, no ramp compensation current unit is disposed, and an output of the current subtraction unit is directly output to the output end of this unit circuit.

An operating principle of the adaptive-ramp-compensation current generation module 3 is as follows: A second input end of the adaptive-ramp-compensation current generation module 3 receives an output current signal provided by the first current generation module 5, and the output current signal is scaled to a current I6 through the twelfth PMOS transistor PM52. In addition, a first input end of the adaptive-ramp-compensation current generation module 3 receives an output current signal provided by the second current generation module 6, and the output current signal is scaled to a current I4 through the eleventh PMOS transistor PM51. The current I4 passes through a current mirror formed by the seventh NMOS transistor NM51 and the eighth NMOS transistor NM52, and the current I4 is mirrored to a current I5 based on a ratio of 1:k51. A current signal obtained based on a difference between the current I6 and the current I5 is directly used as a ramp compensation current Iramp, and the ramp compensation current Iramp is output to a second input end of the control signal generation module 2.

It can be learned from the foregoing analysis that, in the second embodiment of the present invention, a relationship between the ramp compensation current Iramp and the currents I4 and I6 is as follows:

$$Iramp = I6 - k51*I4 \quad\quad (12)$$

It can be learned from the foregoing analysis that the ramp compensation current Iramp shown in the formula 12 in this embodiment has the same functional characteristics as the ramp compensation current Iramp shown in the formula 8 in the first embodiment. The buck DC-DC converter is used as an example. When the input voltage Vin is constant and the output voltage Vout increases, in other words, the duty cycle increases, the current I4 remains unchanged, and the current I6 increases. It can be learned from the formula 12 that the ramp compensation current Iramp increases. When the output voltage Vout is constant and the input voltage Vin increases, in other words, the duty cycle decreases, the current I6 remains unchanged, and the current I4 increases. It can be learned from the formula 12 that the ramp compensation current Iramp decreases. Therefore, the peak current control circuit can adaptively adjust a magnitude of the ramp compensation current Iramp based on changes in the input voltage Vin and the output voltage Vout.

Through comparison between the first embodiment and the peak current control circuit provided in the second embodiment of the present invention, in this embodiment, the structure of the adaptive-ramp-compensation current generation module 3 is simplified, and the ramp compensation current module is omitted. Therefore, accuracy of adjusting the ramp compensation current Iramp in the peak current control circuit provided by the first embodiment is higher than that in the second embodiment.

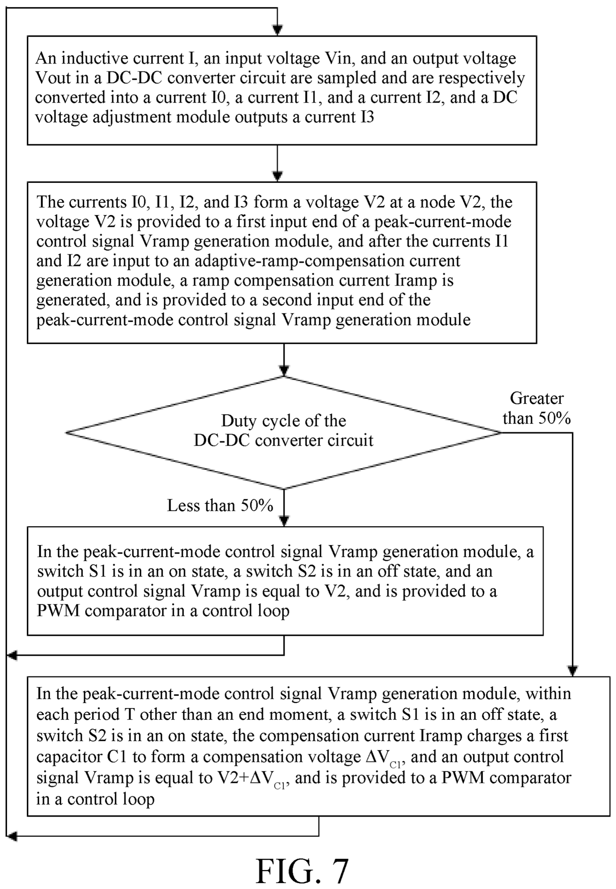

Based on the peak current control circuit provided in the foregoing embodiments, the present invention further provides a control method in which the peak current control circuit implements adaptive ramp compensation. As shown in FIG. 7, the control method includes the following steps:

S1: An inductive-current detection module samples a current flowing through an inductor L in a DC-DC converter, and converts the current into a corresponding output current I0. A first current generation module samples an input voltage Vin of the DC-DC converter, and converts the input voltage Vin into a corresponding output current I1. A second current generation module samples an output voltage Vout of the DC-DC converter, and converts the output voltage Vout into a corresponding output current I2. A DC voltage adjustment module outputs a current I3.

S2: The currents I0, I1, I2, and I3 form a voltage V2 (a first voltage) at a node V2, and the voltage V2 is provided to a first input end of a control signal generation module. After the currents I1 and I2 are input to an adaptive-ramp-compensation current generation module, a ramp compensation current Iramp is generated, and is provided to a second input end of the control signal generation module.

S3: In the DC-DC converter, when a duty cycle is less than 50%, a next step is performed; or when a duty cycle is greater than or equal to 50%, step S6 is performed.

S4: In the control signal generation module, a switch S1 is in an on state, and a switch S2 is in an off state. An output control signal Vramp is equal to V2, and is provided to a PWM comparator in a control loop.

S5: Return to step S1.

S6: In the control signal generation module, within each period T other than an end moment, a switch S1 is in an off state, and a switch S2 is in an on state. The ramp compensation current Iramp charges a first capacitor C1 to form a compensation voltage $\Delta V_{C1}$. An output control signal Vramp is equal to $V2+\Delta V_{C1}$, and is provided to a PWM comparator in a control loop.

S7: Return to step S1.

In the peak current control circuit provided in the present prevention, related current/voltage signals are cyclically sampled to generate the control signal Vramp, and the control signal Vramp is provided to the control loop, to implement real-time adaptive ramp compensation control on the DC-DC converter.

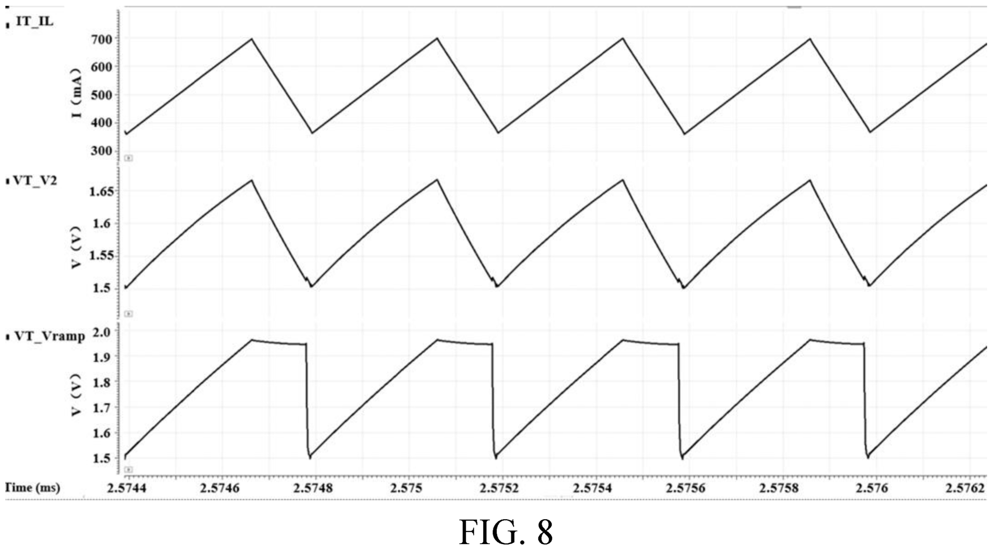

To verify superb performance of the peak current control circuit provided in embodiments of the present invention, the inventor performs simulation testing on a waveform of a control signal Vramp when a duty cycle is greater than or equal to 50% and when the technical solutions are applied to a buck DC-DC converter. A testing result is shown in FIG. 8.

In FIG. 8, horizontal coordinates represent time, and vertical coordinates represent an inductive current $I_L$, a node voltage V2, and a control signal Vramp from top to bottom. It can be learned from FIG. 8 that a signal waveform of the node voltage V2 can well follow a change in a signal waveform of the inductive current $I_L$. A signal waveform, obtained through adaptive ramp compensation, of the control signal Vramp can meet a requirement for stable operation of a loop, to avoid a subharmonic oscillation phenomenon.

Embodiments of the present invention further provide a DC-DC converter. The DC-DC converter includes the peak current control circuit for adaptive ramp compensation provided in the present invention. A function of the DC-DC converter is to adaptively adjust ramp compensation strength by sampling changes in an output voltage and an input voltage, to ensure stable operation of the DC-DC converter. The DC-DC converter may be a buck, boost, buck-boost, or cuk DC-DC converter with a wide output voltage range. A circuit of the DC-DC converter further includes at least a switching transistor, an inductor, a capacitor, and other elements shown in FIG. 1. A specific structure of the peak current control circuit in the DC-DC converter is not described in detail herein again.

To sum up, compared with the conventional technology, in the peak current control circuit for adaptive ramp compensation provided in the present invention, through cooperation of modules and units, when a duty cycle of a DC-DC converter is greater than or equal to 50%, a compensation current that varies with an output voltage and an input voltage can be provided, so that a generated ramp compensation amount is kept within an appropriate range (to be specific, ranging from 0.75 time to 1 time of a slope of a falling segment of an inductive current). In this way, in a system with a variable input voltage and a variable output voltage, in an overall loop, no subharmonic oscillation occurs due to under compensation, and a transient characteristic of a peak current mode is not affected by overcompensation. In addition, in the present invention, a voltage range of a control signal Vramp can be further adjusted, to keep the Vramp signal within an appropriate range, and ensure normal operation of an error amplifier. Therefore, the peak current control circuit provided in the present invention has the following beneficial effects: skillful and proper circuit design, low design costs, high converter operation efficiency, superb circuit performance, and the like.

The foregoing describes in detail the peak current control circuit and method for adaptive ramp compensation and the DC-DC converter provided in the present invention. Any obvious variations made by a person of ordinary skill in the art to the present invention without departing from the essence of the present invention shall fall within the protection scope of the present invention.

**Claims**

1. A peak current control circuit for adaptive ramp compensation, used in a control loop of a DC-DC converter, and comprising an inductive-current detection module, a control signal generation module, an adaptive-ramp-compensation current generation module, a DC voltage adjustment module, a first current generation module, and a second current generation module, wherein

    the inductive-current detection module is configured to sample a current flowing through an inductor in the DC-DC converter, convert the current into a corresponding voltage signal, and output the voltage signal to the control signal generation module;
    the first current generation module is configured to sample an output voltage of the DC-DC converter, convert the output voltage into a corresponding current signal, and separately output the current signal to the control signal generation module and the adaptive-ramp-compensation current generation module;
    the second current generation module is configured to sample an input voltage of the DC-DC converter, convert the input voltage into a corresponding current signal, and separately output the current signal to the control signal generation module and the adaptive-ramp-compensation current generation module;
    the adaptive-ramp-compensation current generation module receives the current signals output by the second current generation module and the first current generation module, generates a ramp compensation current through subtraction or through scaling and subtraction, and outputs the ramp compensation current to the control signal generation module; and
    the control signal generation module receives the current signals output by the inductive-current detection module, the second current generation module, and the first current generation module, and current signals output by the DC voltage adjustment module and the adaptive-ramp-compensation current generation module, generates a control signal, and outputs the control signal to an inverting input end of a PWM comparator in the DC-DC converter, to adaptively adjust ramp compensation strength.

2. The peak current control circuit according to claim 1, wherein
a first input end and a second input end of the inductive-current detection module are respectively connected to two ends of the inductor in the DC-DC converter, an input end of the first current generation module is connected to an output voltage end of the DC-DC converter, an input end of the second current generation module is connected to an input voltage end of the DC-DC converter, and an output end of the control signal generation module is connected to an inverting input end of a PWM comparator in the DC-DC converter, to form the control loop.

3. The peak current control circuit according to claim 1 or 2, wherein
the inductive-current detection module comprises a first resistor, a second resistor, a second capacitor, and a third capacitor, wherein one end of the first resistor is connected to the first input end of the inductive-current detection module, one end of the second capacitor is connected to the second input end of the inductive-current detection module, both the other end of the first resistor and the other end of the second capacitor are connected to the third capacitor, the other end of the third capacitor is connected to an output end of the inductive-current detection module and the second resistor, the other end of the second resistor is connected to a ground potential end, and the output end of the inductive-current detection module is connected to a first input end of the control signal generation module.

4. The peak current control circuit according to claim 1, wherein
the DC voltage adjustment module comprises a reference module, a fifth PMOS transistor, and a sixth PMOS transistor, wherein an output end of the reference module is connected to a drain of the fifth PMOS transistor, the drain of the fifth PMOS transistor is short-circuited to a gate of the fifth PMOS transistor and then connected to a gate of the sixth PMOS transistor, both a source of the fifth PMOS transistor and a source of the sixth PMOS transistor are connected to a power supply end, a drain of the sixth PMOS transistor is connected to an output end of the DC voltage adjustment module, and the output end is connected to a first input end of the control signal generation module.

5. The peak current control circuit according to claim 1, wherein

the adaptive-ramp-compensation current generation module comprises a seventh PMOS transistor, an eighth PMOS transistor, a ninth PMOS transistor, a tenth PMOS transistor, a third NMOS transistor, a fourth NMOS transistor, a fifth NMOS transistor, and a sixth NMOS transistor, wherein
a gate of the seventh PMOS transistor is connected to a first input end of the adaptive-ramp-compensation current generation module, a gate of the eighth PMOS transistor is connected to a second input end of the adaptive-ramp-compensation current generation module, both a source of the seventh PMOS transistor and a source of the eighth PMOS transistor are connected to a power supply end, a drain of the seventh PMOS transistor is connected to a drain of the third NMOS transistor, the drain of the third NMOS transistor is short-circuited to a gate of the third NMOS transistor and then connected to a gate of the fourth NMOS transistor, both a source of the third NMOS transistor and a source of the fourth NMOS transistor are connected to a ground potential end, a drain of the fourth NMOS transistor is connected to a drain of the eighth PMOS transistor and a drain of the fifth NMOS transistor, the drain of the fifth NMOS transistor is short-circuited to a gate of the fifth NMOS transistor and then connected to a gate of the sixth NMOS transistor, both a source of the fifth NMOS transistor and a source of the sixth NMOS transistor are connected to the ground potential end, a drain of the sixth NMOS transistor is connected to a drain of the ninth PMOS transistor, the drain of the ninth PMOS transistor is short-circuited to a gate of the ninth PMOS transistor and then connected to a gate of the tenth PMOS transistor, both a source of the ninth PMOS transistor and a source of the tenth PMOS transistor are connected to the power supply end, a drain of the tenth PMOS transistor is connected to an output end of the adaptive-ramp-compensation current generation module, and the output end is connected to a second input end of the control signal generation module.

6. The peak current control circuit according to claim 1 or 2, wherein

the control signal generation module comprises a first capacitor, a first control switch, and a second control switch, wherein
one end of the second control switch is connected to a second input end of the control signal generation module, the other end of the second control switch is connected to the first capacitor and is also connected to the first control switch and the output end of the control signal generation module, and both the other end of the first capacitor and the other end of the first control switch are connected to a first input end of the control signal generation module; and
an on/off status of the first control switch and an on/off status of the second control switch are respectively controlled by a first control signal and a second control signal.

7. The peak current control circuit according to claim 1, wherein

the adaptive-ramp-compensation current generation module comprises an eleventh PMOS transistor, a twelfth PMOS transistor, a seventh NMOS transistor, and an eighth NMOS transistor, wherein
a gate of the eleventh PMOS transistor is connected to a first input end of the adaptive-ramp-compensation current generation module, a gate of the twelfth PMOS transistor is connected to a second input end of the adaptive-ramp-compensation current generation module, both a source of the eleventh PMOS transistor and a source of the twelfth PMOS transistor are connected to a power supply end, a drain of the eleventh PMOS transistor is connected to a drain of the seventh NMOS transistor, the drain of the seventh NMOS transistor is short-circuited to a gate of the seventh NMOS transistor and then connected to a gate of the eighth NMOS transistor, both a source of the seventh NMOS transistor and a source of the eighth NMOS transistor are connected to a ground potential end, both a drain of the eighth NMOS transistor and a drain of the twelfth PMOS transistor are connected to an output end of the adaptive-ramp-compensation current generation module, and the output end is connected to a second input end of the control signal generation module.

8. The peak current control circuit according to any one of claims 1 to 7, wherein

when a duty cycle of the DC-DC converter is less than 50%, within each switching period T, the first control signal is a high-level signal, the first control switch is in a normally-on state, a first voltage is directly output as the control signal, the second control signal is a low-level signal, and the second control switch is in a normally-off state to cut off the ramp compensation current, wherein the control signal Vramp satisfies the following formula:

$$V_{ramp} = V_2 = R_2(k\pi FL*I_L + I1 + I2 + I3 + kV_{out}),$$

wherein

V2 is the first voltage, I1 is an output current of the second current generation module, I2 is an output current of the first current generation module, I3 is an output current of the DC voltage adjustment module, Vout is an output-end voltage of the DC-DC converter, F is a switching frequency in the DC-DC converter, L is an inductance value of the inductor in the DC-DC converter, $I_L$ is the current flowing through the inductor, $R_2$ is a resistance value of the second resistor, and k is a coefficient related to the resistors and the capacitors in the inductive-current detection module.

9. The peak current control circuit according to any one of claims 1 to 7, wherein

when a duty cycle of the DC-DC converter is greater than or equal to 50%, at an end moment of each switching period T, the first control signal generates a high-level pulse signal, the first control switch is instantly turned on, a charge on the first capacitor is reset to pull up the control signal to a first voltage, the second control signal generates a low-level pulse signal, and the second control switch is instantly turned off to cut off the ramp compensation current at a moment at which the charge on the first capacitor is reset; and within each switching period T other than the end moment, the first control signal is a low-level signal, the first control switch is in an off state, the second control signal is a high-level signal, the second control switch is in an on state, the first capacitor is charged by the ramp compensation current to form a compensation voltage, and in this case, the compensation voltage and the first voltage are added up and then output as the control signal, wherein the control signal Vramp satisfies the following formula:

$$V_{ramp} = \frac{k2*k3}{C1}(I6 - k1*I4)\, t + R_2*k*\pi FL*I_L + R_2 I1 + R_2(I2 + k*V_{out}) + R_2 I3,$$

wherein

C1 is a capacitance value of the first capacitance, I4 is a current obtained by scaling I1, I6 is a current obtained by scaling I2, all of k1, k2, and k3 are ratio coefficients, and $0 \le t \le T$.

10. A peak current control method for adaptive ramp compensation, implemented based on the peak current control circuit according to any one of claims 1 to 9, and comprising the following steps:

(1) sampling an input voltage, an output voltage, and an inductive current in a DC-DC converter, and respectively converting the input voltage, the output voltage, and the inductive current into a first current, a second current, and a third current; and outputting, by a DC voltage adjustment module, a fourth current;
(2) forming, by the first current, the second current, the third current, and the fourth current, a first voltage, providing the first voltage to a first input end of a control signal generation module, inputting the first current and the second current to an adaptive-ramp-compensation current generation module to generate a ramp compensation current, and providing the ramp compensation current to a second input end of the control signal generation module;
(3) in the DC-DC converter, when a duty cycle is less than 50%, performing a next step; or when a duty cycle is greater than or equal to 50%, performing step (6);
(4) in the control signal generation module, turning on a first control switch, turning off a second control switch, outputting a control signal equal to a first voltage, and providing the control signal to a PWM comparator in a control loop; and
(5) returning to step (1); or
(6) in the control signal generation module, within each period T other than an end moment, turning off a first control switch, turning on a second control switch, charging, by the ramp compensation current, a first capacitor to form a compensation voltage, outputting a control signal equal to a sum of a first voltage and the compensation voltage, and providing the control signal to a PWM comparator in a control loop; and
(7) returning to step (1).

**11.** A DC-DC converter, comprising the peak current control circuit according to any one of claims 1 to 9.

FIG. 1

Adaptive-ramp-compensation
current generation module

| Current scaling 1 | Current subtraction | Current scaling 2 |

Ramp compensation current

**3**

DC voltage adjustment module

**4**

Reference module

Peak-current-mode control signal Vramp generation module

Vramp

Inductive-current detection module

L1    L2

A

First current generation module

Vin

Second current generation module

Vout

**5**

**6**

**2**

**1**

## FIG. 2

FIG. 3

EP 4 693 864 A1

FIG. 4(a)

FIG. 4(b)

EP 4 693 864 A1

FIG. 5(a)

FIG. 5(b)

FIG. 6

An inductive current I, an input voltage Vin, and an output voltage Vout in a DC-DC converter circuit are sampled and are respectively converted into a current I0, a current I1, and a current I2, and a DC voltage adjustment module outputs a current I3

The currents I0, I1, I2, and I3 form a voltage V2 at a node V2, the voltage V2 is provided to a first input end of a peak-current-mode control signal Vramp generation module, and after the currents I1 and I2 are input to an adaptive-ramp-compensation current generation module, a ramp compensation current Iramp is generated, and is provided to a second input end of the peak-current-mode control signal Vramp generation module

Duty cycle of the DC-DC converter circuit

Greater than 50%

Less than 50%

In the peak-current-mode control signal Vramp generation module, a switch S1 is in an on state, a switch S2 is in an off state, and an output control signal Vramp is equal to V2, and is provided to a PWM comparator in a control loop

In the peak-current-mode control signal Vramp generation module, within each period T other than an end moment, a switch S1 is in an off state, a switch S2 is in an on state, the compensation current Iramp charges a first capacitor C1 to form a compensation voltage $\Delta V_{C1}$, and an output control signal Vramp is equal to $V2+\Delta V_{C1}$, and is provided to a PWM comparator in a control loop

FIG. 7

FIG. 8

## INTERNATIONAL SEARCH REPORT

| International application No. |
| --- |
| **PCT/CN2024/085106** |

**A. CLASSIFICATION OF SUBJECT MATTER**

H02M3/156(2006.01)i; H02M3/158(2006.01)i; H02M1/08(2006.01)i; H02M1/00(2007.01)i

According to International Patent Classification (IPC) or to both national classification and IPC

**B. FIELDS SEARCHED**

Minimum documentation searched (classification system followed by classification symbols)

H02M

Documentation searched other than minimum documentation to the extent that such documents are included in the fields searched

Electronic data base consulted during the international search (name of data base and, where practicable, search terms used)

VEN, CNABS, CNTXT, WOTXT, EPTXT, USTXT, CNKI, IEEE: 自适应, 斜坡, 补偿, 峰值, 电感电流, self 1w adaptive, slope, compensation, peak

**C. DOCUMENTS CONSIDERED TO BE RELEVANT**

| Category* | Citation of document, with indication, where appropriate, of the relevant passages | Relevant to claim No. |
| --- | --- | --- |
| PX | CN 116317558 A (VANCHIP (TIANJIN) ELECTRONIC TECHNOLOGY CO., LTD.) 23 June 2023 (2023-06-23)<br>claims 1-11 | 1-11 |
| A | CN 110277915 A (UNIVERSITY OF ELECTRONIC SCIENCE AND TECHNOLOGY OF CHINA) 24 September 2019 (2019-09-24)<br>description, paragraphs 23-33, and figures 1-2 | 1-11 |
| A | CN 110545039 A (HANGZHOU SILAN MICROELECTRONICS CO., LTD.) 06 December 2019 (2019-12-06)<br>entire document | 1-11 |
| A | US 2016006336 A1 (TEXAS INSTRUMENTS INC.) 07 January 2016 (2016-01-07)<br>entire document | 1-11 |
| A | US 2019181754 A1 (CIRRUS LOGIC INTERNATIONAL SEMICONDUCTOR LTD.) 13 June 2019 (2019-06-13)<br>entire document | 1-11 |

☐ Further documents are listed in the continuation of Box C.   ☑ See patent family annex.

| * Special categories of cited documents: | "T" later document published after the international filing date or priority date and not in conflict with the application but cited to understand the principle or theory underlying the invention |
| --- | --- |
| "A" document defining the general state of the art which is not considered to be of particular relevance | |
| "D" document cited by the applicant in the international application | "X" document of particular relevance; the claimed invention cannot be considered novel or cannot be considered to involve an inventive step when the document is taken alone |
| "E" earlier application or patent but published on or after the international filing date | |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
| --- | --- |
| **20 June 2024** | **26 June 2024** |

| Name and mailing address of the ISA/CN | Authorized officer |
| --- | --- |
| **China National Intellectual Property Administration (ISA/CN)**<br>**China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
Information on patent family members

International application No.

**PCT/CN2024/085106**

| Patent document cited in search report | | | Publication date (day/month/year) | Patent family member(s) | | | Publication date (day/month/year) |
|---|---|---|---|---|---|---|---|
| CN | 116317558 | A | 23 June 2023 | None | | | |
| CN | 110277915 | A | 24 September 2019 | None | | | |
| CN | 110545039 | A | 06 December 2019 | None | | | |
| US | 2016006336 | A1 | 07 January 2016 | CN | 105245103 | A | 13 January 2016 |
| US | 2019181754 | A1 | 13 June 2019 | None | | | |

Form PCT/ISA/210 (patent family annex) (July 2022)